# EUROPEAN PATENT SPECIFICATION

(11) **EP 4 070 993 B1**
(45) Date of publication and mention of the grant of the patent: **01.11.2023**
(21) Application number: 22166882.5
(22) Date of filing: 06.04.2022
(51) Int. Cl.: B60Q 1/04, B60R 19/24

(54) **FRONT BUMPER SKIN, FRONT BUMPER SIDE MOUNTING STRUCTURE AND ASSEMBLY METHOD THEREOF**
VORDERE STOSSFÄNGERVERKLEIDUNG, VORDERE STOSSFÄNGERSEITIGE MONTAGESTRUKTUR UND MONTAGEVERFAHREN DAFÜR
REVÊTEMENT DE PARE-CHOCS AVANT, STRUCTURE DE MONTAGE LATÉRALE DE PARE-CHOCS AVANT ET PROCÉDÉ D'ASSEMBLAGE ASSOCIÉ

(30) Priority: 08.04.2021 CN 202110378639
(43) Date of publication of application: 12.10.2022
(73) Proprietor: PSA Automobiles SA, 78300 Poissy (FR)
(72) Inventor: WANG, ZI YE, SHANGHAI, 200030 (CN); LI, BING, SHANGHAI, 200030 (CN); SUN, WEI, SHANGHAI, 200030 (CN); WANG, HONGRI, SHANGHAI, 200030 (CN); YIN, JUNLONG, SHANGHAI, 200030 (CN)

(56) References cited:
- EP-A1- 1 252 045
- FR-A1- 3 100 773

## Description

### TECHNICAL FIELD

The present disclosure generally relates to the technical field of vehicle manufacturing, and more specifically relates to a front bumper skin, a front bumper side mounting structure with the front bumper skin and an assembly method thereof.

### BACKGROUND

With the development of the automobile industry, the vehicle shapes are increasingly diversified. Correspondingly, the matching areas of the front bumper assembly, headlights and surrounding vehicle components are diversified with the changes of shape design. In the environment where engineering plastics are widely used, vehicle bumpers tend to be made of plastics, which not only maintains the original protection function, but also pursues the light weight and harmony with the vehicle body shape.

Generally, the headlights are connected through the mounting bracket or directly to the opening on the front bumper skin. Due to the limitation of demoulding process when the front bumper skin is integrally formed, large and rounded corners or arc-shaped gaps are often formed in the corner area of the opening. When the headlights are connected to the opening, it is inevitable that a large visible gap will appear at the corner, which will affect the overall appearance quality of the vehicle. As an important decorative part of the front of the vehicle, this bad appearance quality directly affects consumers' intention to buy vehicle.

From the prior art FR 3 100 773 A1 and EP 1 252 045 A1 are known. The document FR 3 100 773 A1 discloses a front bumper skin according to the preamble of claim 1.

### SUMMARY

The purpose of the disclosure is to overcome the defects in the prior art, propose a front bumper skin to effectively solve the problem of visible clearance when installing headlights. At the same time, based on the improved front bumper skin, the disclosure provides a front bumper side mounting structure and an assembly method thereof, so that when the front bumper side portion is assembled with headlights and other vehicle components, controlled matching accuracy can be obtained, the appearance problems caused by poor matching can be solved, and the assembly efficiency can be improved.

Therefore, according to one aspect of the present disclosure, a front bumper skin is proposed, which is provided with a mounting opening suitable for mounting a headlight, wherein the front bumper skin comprises a covering member arranged along the edge of the mounting opening to shield a gap at the edge of the mounting opening, and wherein the covering member at least covers the lower edge of the mounting opening.

With the front bumper skin provided by the disclosure, the gap at the edge of the mounting opening is covered by the covering member, especially aiming at the lower edge of the mounting opening, which is easy to be observed, the matching gap between the front bumper skin and the headlight is improved, and the appearance of the vehicle is more beautiful.

According to the above technical concept, the present disclosure may further comprise any one or more of the following alternative forms.

According to the invention, the covering member is configured as a substantially L-shape and comprises a first covering part arranged along the lower edge of the mounting opening and a second covering part extending from the first covering part along the side edge of the mounting opening. The covering member which covers the side edge of the mounting opening can further improve the possible observed fit gap between the front bumper skin and the headlight.

In some alternative forms, the front bumper skin further comprises a reinforcing member arranged on the inner surface, which is arranged around the mounting opening and comprises: a first reinforcing member connected to at least a portion of the inner surface of the covering member; a second reinforcing member connected to a portion where the covering member is not arranged. By providing the separated reinforcing members, different reinforcing structures can be provided for different areas, which is beneficial to obtain a good compromise between structural strength and cost-effectiveness, and at the same time, it is beneficial to realize the local adjustment of the gap between the headlight and the front bumper skin.

In some alternative forms, the first reinforcing member and/or the covering member is provided with a positioning part adapted to match with the corresponding structure of the headlight. The positioning part is beneficial to ensure the rapid installation to the correct position during the assembly process with the headlight, and further improve the assembly efficiency.

In some alternative forms, the first reinforcing member is provided with a positioning protrusion adjacent to the mounting opening to be suitable for engaging with a positioning receiving part on the headlight.

In some alternative forms, the covering member is provided with a positioning lip adjacent to the mounting opening to be suitable for engaging with a positioning groove on the headlight.

In some alternative forms, the first reinforcing member and the second reinforcing member are respectively connected to the inner surfaces of the covering member and the front bumper skin by welding, clamping or gluing.

In some alternative forms, the front bumper skin comprises a connecting end suitable for connecting a fender, the second reinforcing member is configured to be matched with the contour of the front bumper skin, and a distance existing between the periphery of the second reinforcing member and the connecting end to provide freedom of the connecting end in the transverse direction.

The freedom of the connecting end of the front bumper skin in the transverse direction makes it possible for the front bumper skin to be connected to the fender in the transverse direction. Compared with the existing way of inserting the front bumper skin with the fender in the longitudinal direction, the connecting structure obtained by the disclosure can effectively improve the assembly clearance between the front bumper skin and the fender while improving the assembly efficiency.

According to another aspect of the present disclosure, a front bumper side mounting structure is also provided, which comprises a headlight, a fender and the front bumper skin described above. The headlight is connected to the mounting opening of the front bumper skin, and a gap at the edge of the mounting opening is shielded by a covering member, and the front bumper skin is configured to engage the fender in the transverse direction.

According to another aspect of the present disclosure, a method for assembling a front bumper side mounting structure is also provided, comprising transverse applying a force to the connecting end of the front bumper skin for connecting the fender in the transverse direction, so that the connecting end is deformed towards the outside;
maintaining the deformation state of the connecting end and connecting the front bumper skin with the headlight; and
releasing the force applied to the connecting end to make the front bumper skin rebound towards the inside, and then applying an inward thrust to the connecting end to connect the front bumper skin to the fender.

The front bumper skin and the front bumper side mounting structure based on the concept of the disclosure effectively solve the problem of poor matching caused by a large gap between the front bumper skin and the headlight fitting area, and ensure the structural strength and mounting accuracy, which are suitable for headlights, headlight assemblies or front bumper assemblies with various shapes.

### BRIEF DESCRIPTION OF THE DRAWINGS

Other features and advantages of the present disclosure will be better understood from the following preferred embodiments described in detail in conjunction with the accompany drawings, and the same reference numerals identify the same or similar parts, in which:
Fig. 1 is an external schematic view of a front bumper skin according to one embodiment of the present disclosure;
Fig. 2 is a schematic view of the front bumper skin of Fig. 1 with the covering member removed;
Fig. 3 is a schematic view of the covering member on the front bumper skin of Fig. 1;
Fig. 4 is an internal schematic view of the front bumper skin according to one embodiment of the present disclosure;
Fig. 5 is a schematic view of the first reinforcing member on the front bumper skin of Fig. 4;
Fig. 6 is a schematic view of a second reinforcing member on the front bumper skin of Fig. 4;
Fig. 7 is a schematic view of the front bumper skin of Fig. 4 with the covering member and each reinforcement removed;
Fig. 8 is an internal schematic view of the upper covering member of the front bumper skin of Fig. 4;
Fig. 9a is a schematic view of the front bumper skin assembled with the headlight, Fig. 9b is a schematic view of the cross section along line I-I in Fig. 9a, Fig. 9c is a schematic view of the cross section along line II-II in Fig. 9a, Fig. 9d is a schematic view of the cross section along line III-III in Fig. 9a, and Fig. 9e is a schematic view of the cross section along line VI-VI in Fig. 9a; and
Fig. 10a is a schematic view before assembling the front bumper skin with the headlight, Fig. 10b is a schematic view of assembling the front bumper skin with the headlight in the state shown in Fig. 10a, and Fig. 10c is a schematic view after assembling the front bumper skin with vehicle components such as fender.

### DETAILED DESCRIPTION

The implementation and usage of the embodiments will be discussed in detail below. However, it should be understood that the specific embodiments discussed herein are merely illustrative of specific ways to implement and use the present disclosure without limiting the scope of the present disclosure. In the description for the structural positions of various components, representations of directions such as "upper", "lower", "top" and "bottom" are not absolute, but relative. When the various components are arranged as shown in the drawings, these representations of directions are appropriate. However, when the positions of the various components in the drawings are changed, these representations of directions are also changed accordingly.

Unless otherwise specified and limited, the terms "installation", "connection", "connection" and "fixation" should be understood broadly. For example, it can be fixed, detachable or integrated; it can be mechanically connected or electrically connected; it can be directly connected or indirectly connected through an intermediate medium, and it can be the internal communication of two elements or the interaction between two elements. For those skilled in the art, the specific meanings of the above terms in this disclosure can be understood according to specific situations.

In this disclosure, "transverse" and "longitudinal" refer to the traveling direction of the vehicle, "transverse" refers to the left-right direction or axle direction of the vehicle, and "longitudinal" refers to the front-rear direction of the vehicle. "Inside" and "outside" refer to the inside and outside directions relative to the vehicle. In this disclosure, the terms "first", "second", "third", "fourth" and "fifth" are not used to limit the sequence and the number of components unless otherwise stated.

According to the concept of the present disclosure, a covering member for covering the gap at the edge of the mounting opening is provided on the front bumper skin, so that there is no visible fit gap at the mounting opening after the headlight is mounted to the mounting opening. That is, a front bumper skin that almost completely covers or surrounds the periphery of the headlight is provided, thereby obtaining good appearance quality. In the following description combined with the accompanying drawings, taking a single headlight as an example, it should be understood that, based on different design requirements, the headlight can be a single headlight or a headlight assembly including any combination of headlights, daytime running lights, position lights, etc. The front bumper skin of the present disclosure at least completely surrounds a portion of the headlight or headlight assembly joined to the mounting opening.

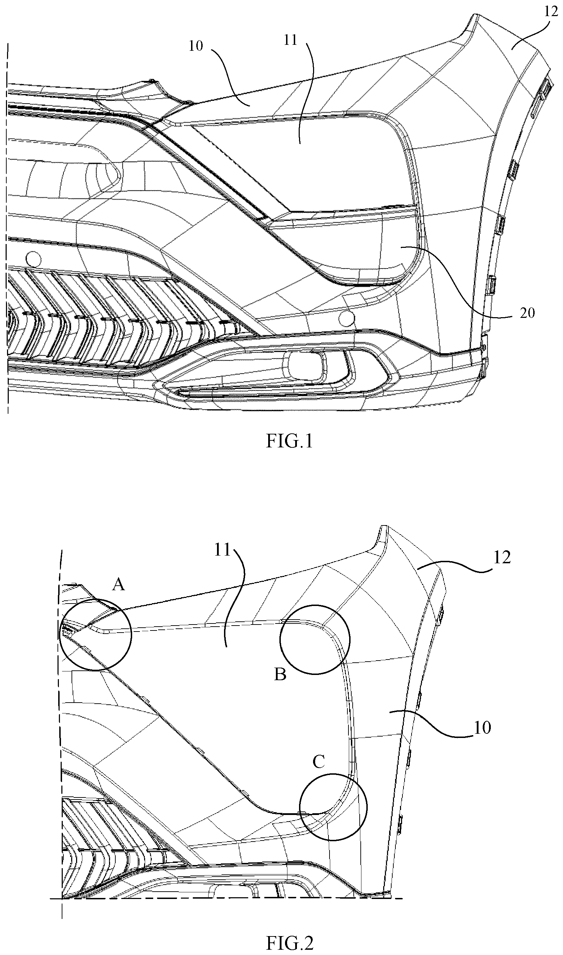

First, referring to Figs. 1 to 3, a front bumper skin 10 according to one embodiment of the present disclosure is shown. The front bumper skin 10 is provided with a mounting opening 11 suitable for installing headlight and a connecting end 12 suitable for connecting a fender. As shown in Fig. 2, when the front bumper skin 10 is integrally molded by, for example, injection molding process, due to the limitation of demoulding process, large and rounded corners (shown at B and C in the figure) or arc-shaped notches (shown at A in the figure) will be formed at the edge of the mounting opening 11. If the headlight is directly connected, it will inevitably produce visible gap at the corners of the connecting edges, which is not conducive to the appearance quality. Therefore, the present disclosure advantageously provides a covering member 20 which is arranged along the edge of the mounting opening 11 to shield the gap at the edge of the mounting opening 11.

After the front bumper skin is assembled with the headlight, from the consumer's point of view, the bottom and side of the mounting opening 11 are more easily observed, and the covering member 20 advantageously at least covers the lower edge of the mounting opening 11.

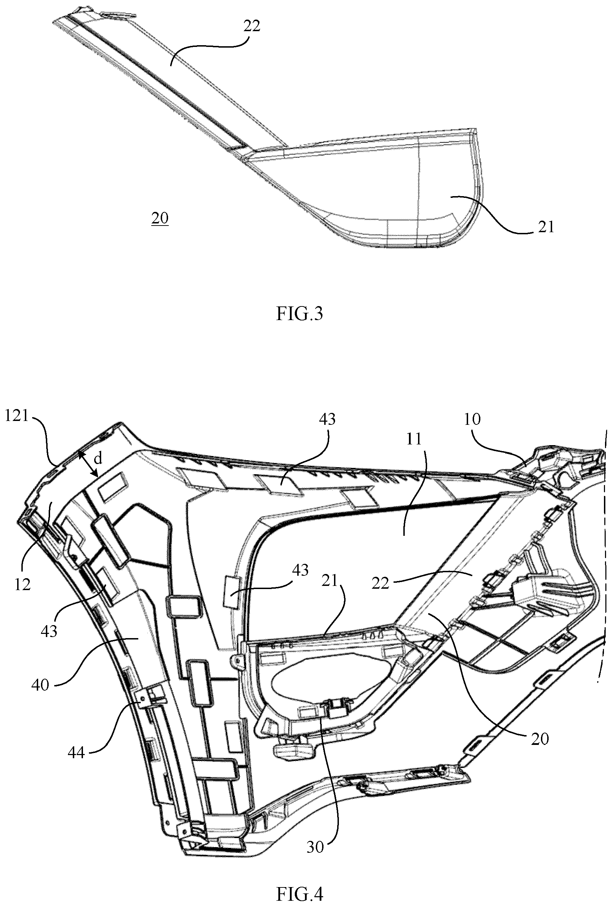

According to the invention, the covering member 20 is configured as a substantially L shape, as shown in Figs. 1 and 3, for example, including a first covering part 21 arranged along the lower edge of the mounting opening 11 and a second covering part 22 extending from the first covering part 21 along the side edge of the mounting opening 11. It should be understood that, depending on the different configuration of the mounting opening, the covering member can also be configured to extend along both side edges of the mounting opening, but not limited to extending along only one side edge in this embodiment. In addition, depending on different headlight configurations, the size of the covering member (the size for covering the edge range of the mounting opening) can change accordingly, but it is necessary to ensure that the irradiation range of the headlight is not affected.

By providing the covering member 20, it can be seen from Fig. 1 that for the edge of the mounting opening 11 (i.e., the peripheral boundary of the headlight), the outer configuration of the front bumper skin forms a pattern for completely surrounding the headlight, effectively avoiding the fit clearance after assembly with the headlight.

Figs. 4 to 8 show the internal structure of the front bumper skin according to one embodiment, and the front bumper skin 10 further comprises a reinforcing member arranged on the inner surface and around the mounting opening 11 to provide the structural strength of the front bumper skin near the peripheral boundary of the headlight. At the same time, the reinforcing member can prevent the front bumper skin from being greatly deformed after sunshine in use and ensure the gap between the headlight and the front bumper skin.

In some embodiments, the reinforcing member may be provided as a single component surrounding the mounting opening to provide overall structural strength. In some embodiments, as shown in Fig. 4, the reinforcing member can be configured to comprise a first reinforcing member 30 and a second reinforcing member 40 which are separated, to improve the local rigidity for different regions, save materials to a certain extent, and realize weight reduction and cost benefit. In addition, with the separated design, the position and quantity of the reinforcing member can be adjusted according to different configurations of front bumper skin, which is beneficial to mass production and suitable for diversified design.

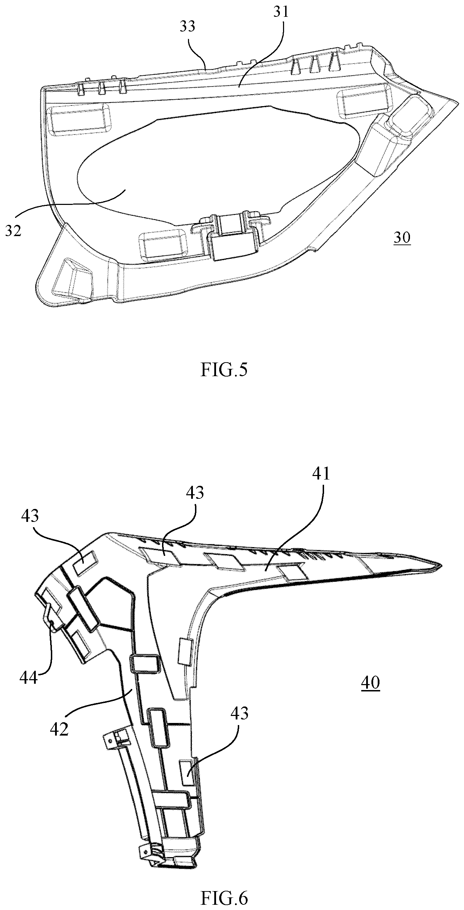

In the illustrated embodiment, the first reinforcing member 30 is connected to at least a part of the inner surface of the covering member 20, and the second reinforcing member 40 is connected to the portion where the covering member 20 is not arranged. Specifically, the first reinforcing member 30 can be match with the contour of the covering member 20, such as the contour of the first covering part 21 of the covering member 20 in Fig. 4, or in some embodiments, the first reinforcing member 30 can also extend to the second covering part 22 of the covering member. Optionally, the first reinforcing member 30 can be provided as an annular structure 31 with a notch 32, thereby achieving the effects of saving materials and reducing weight. The second reinforcing member 40 can also be matched with the contour of the front bumper skin 10, for example, as shown in Fig. 6, it is configured to be approximately L-shaped including the first reinforcing leg 41 and the second reinforcing leg 42, effectively avoiding the deformation problem of the front bumper skin 10 after assembling with vehicle components such as headlight and fender.

As mentioned above, the front bumper skin 10 comprises the connecting end 12 suitable for connecting the fender. Advantageously, while adapting to the contour of the front bumper skin 10, there is a distance d between the periphery of the second reinforcing member 40 and the connecting end 12 to provide the freedom of the connecting end 12 in the transverse direction. In other words, the area of the front bumper skin 10 where the fender is connected does not need to be increased in strength, but this area can be flexibly deformed under the expected load, thus providing a quick and accurate assembly method different from the existing methods, which will be further described below. Depending on different needs, the distance d can be designed as needed to ensure strength and convenient assembly of the front bumper skin. Optionally, the distance d can be selected from 30mm-80mm, such as 50mm.

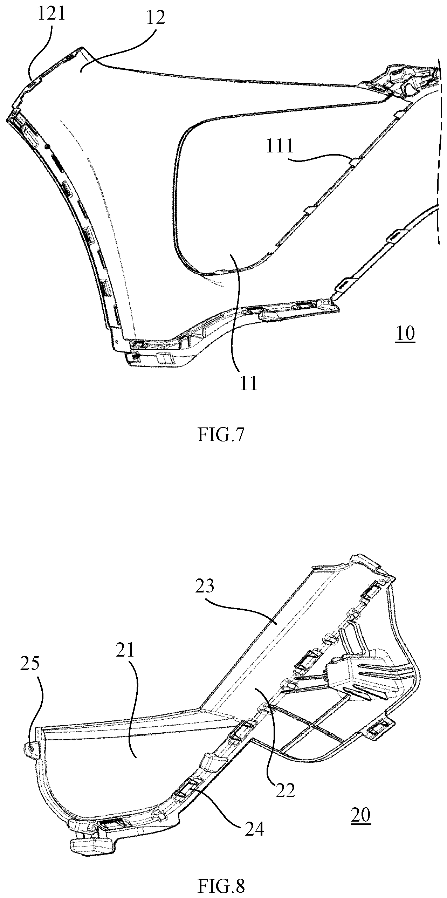

In some embodiments, as shown in Fig. 7, the bottom edge and the side edge of the mounting opening 11 of the front bumper skin 10 for arranging the covering member 20 are provided with a first connecting part 111, and the connecting end 12 is provided with a second connecting part 121 for connecting the fender. Optionally, the second reinforcing member 40 is connected to the inner surface of the front bumper skin 10 by welding (for example, vibration friction welding, ultrasonic welding), clamping or gluing. As shown in Figs. 4 and 6, several welding spots 43 distributed along the periphery of the second reinforcing member 40 are exemplarily shown, and optionally, the second reinforcing member 40 is provided with a third connecting part 44 for connecting other vehicle components.

In some embodiments, as shown in Fig. 8, the covering member 20 may be provided with a fourth connecting part 24 for positioning and connecting the first reinforcing member 30, and optionally, a fifth connecting part 25 for connecting other vehicle components. Optionally, the first reinforcing member 30 is connected to the inner surface of the covering member 20 by welding, clamping or gluing.

In some embodiments, the first reinforcing member 30 and/or the covering member 20 are provided with positioning parts suitable for matching with the corresponding structure of the headlight. That is, the first reinforcing member 30 and/or the covering member 20 can be used as local positioning devices to locally adjust the gap between the headlight and the front bumper skin, thereby further ensuring that there is no visible gap along the edge of the mounting opening and obtaining good perceived visual effect and improving assembly efficiency. As for the portion of the front bumper skin where the second reinforcing member 40 is arranged, it is not easy to be observed by the user at the edge of the mounting opening, and thus no additional positioning structure should be provided, thus simplifying the structure and design cost. At the same time, it also plays a role in avoiding over-positioning.

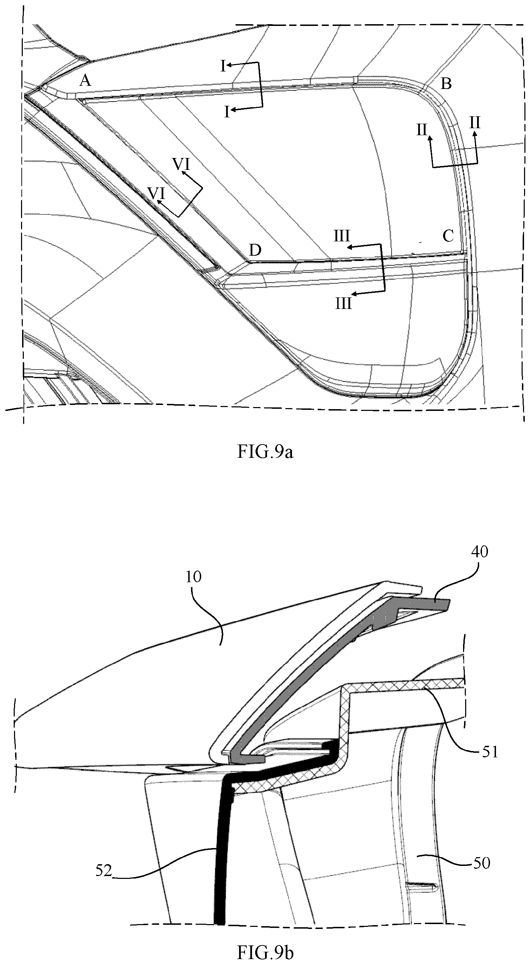

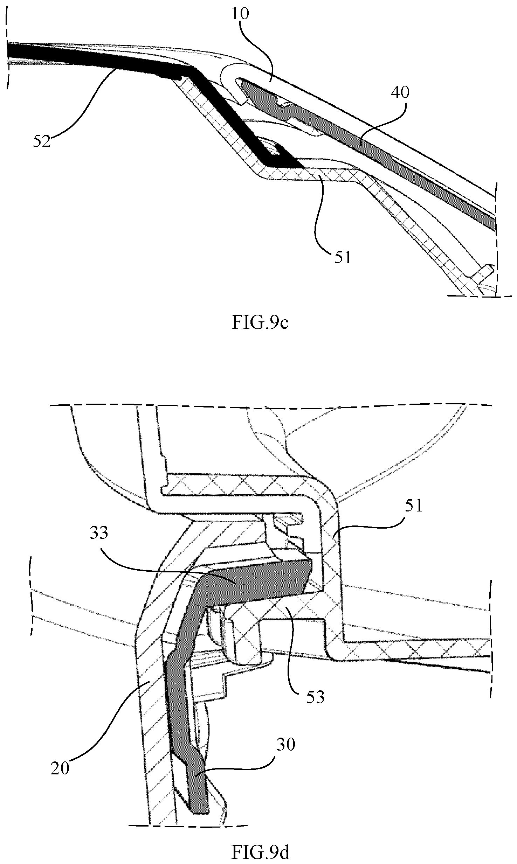

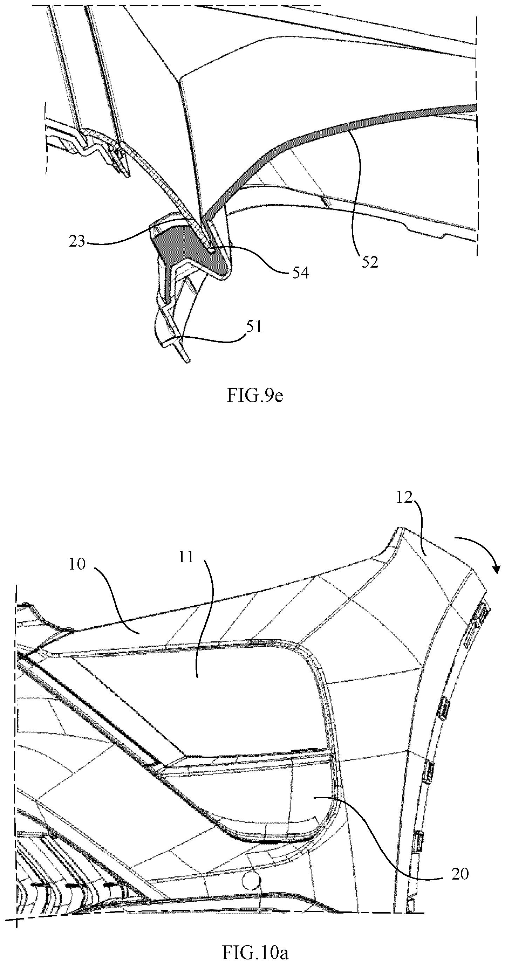

Specifically, with reference to Figs. 9a to 9e, the edge of the exemplary mounting opening is divided into AB section, BC section, CD section and DA section based on the corner, and partial positioning structures are exemplarily shown by the sectional schematic views of the headlight assembled with the front bumper skin taken at each section. Fig. 9b is a schematic cross-sectional view along line I-I in section AB, and the headlight 50 comprises, for example, a lamp housing 51 and a lamp lens 52. At the top edge of the mounting opening, the second reinforcing member 40 is connected to the front bumper skin 10 and assembled to the headlight. Fig. 9c is a schematic cross-sectional view taken along line II-II in section BC. Like Fig. 9b, the front bumper skin 10 connected with the second reinforcing member 40 is assembled to the headlight. Fig. 9d is a schematic cross-sectional view along line III-III in section CD, in which the front bumper skin 10 is provided with the covering member 20 and the first reinforcing member 30 is connected to the inner surface of the covering member 20. The first reinforcing member 30 is provided with a positioning protrusion 33, for example, in the form of a positioning rib or a positioning pin, for positioning by matching with a corresponding structure on the headlight, for example, a positioning receiving part 53 formed on the lamp housing 51. Fig. 9e is a schematic cross-sectional view along line VI-VI in section DA. In the illustrated embodiment, the first reinforcing member 30 does not extend to the second covering part of the covering member 20, and the positioning can be realized by the structure on the covering member 20. For example, as shown in Fig. 8, the covering, member 20 can be provided with a positioning lip 23, which can be inserted into the corresponding positioning groove 54 on the lamp lens 52 of the headlight 50, so as to achieve accurate positioning and eliminate the fit gap therebetween and ensure good appearance quality.

The front bumper side mounting structure and its assembly method according to one embodiment of the present disclosure will be described below with reference to Figs. 10a to 10c.

In the illustrated embodiment, the front bumper side mounting structure comprises the headlight 50, the fender 60 and the front bumper skin 10, wherein the mounting opening 11 of the front bumper skin 10 is assembled to the headlight 50, and the connecting end 12 of the front bumper skin 10 is assembled to the fender 60. As described above, the connecting end 12 has freedom in the transverse direction, so that when assembling, the front bumper side mounting structure of the present disclosure can be assembled in the following order.

First, in the transverse direction, a force is applied to the connecting end 12 of the front bumper skin 10 for connecting the fender, so that the connecting end 12 is deformed outward as shown by the arrow in Fig. 10a.

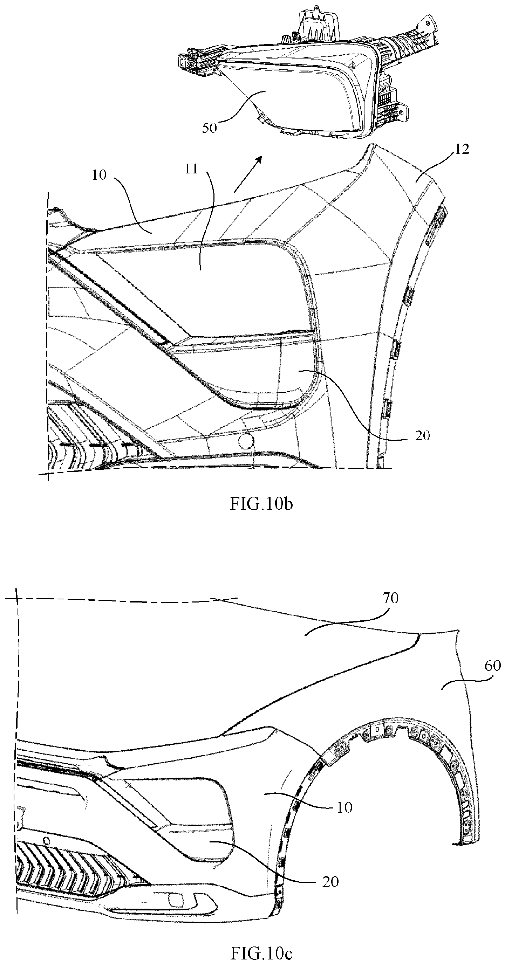

Then, the front bumper skin 10 is connected to the headlight 50. For example, the front bumper skin 10 is installed in the direction of arrow in Fig. 10b, or the headlight 50 can be installed in the opposite direction. During the installation process, the deformation state of the connecting end 12 is maintained and the headlight is positioned by the positioning part provided on the first reinforcing member and/or the covering member.

After that, the force applied to the connecting end 12 is released to make the front bumper skin 10 rebound towards the inside, and then the connecting end 12 is reversely pushed to be connected to the fender 60. For example, it is engaged with the corresponding structure on the fender 60 through the second connecting part 121 shown in Fig. 7.

Fig. 10c shows a schematic view after the front bumper skin 10 is connected to the fender 60, and exemplarily shows an upper hood 70.

As the connecting end is connected to the fender in the way of transverse deformation, compared with the front bumper skin connected with the fender in the longitudinal direction in the prior art, the assembly method of the disclosure provides more feasibility for the method for assembling the front bumper skin or the front bumper assembly, which does not affect the main load of the vehicle in the longitudinal direction, and is more convenient and stable to assemble, improves the assembly efficiency and is more conducive to avoid the fit gap between the two components. Through the implementation of the disclosure, the gap/surface difference at the front bumper side mounting structure can be ensured during the delivery of the whole vehicle to consumers and the subsequent use of consumers, thereby ensuring the appearance quality of the whole vehicle.

The technical contents and technical features of the present disclosure have been disclosed above. However, it can be understood that those skilled in the art can make various changes and improvements to the above disclosed concept, but all the changes and improvements fall within the scope of protection of the present disclosure. The description of the above embodiments is illustrative and not restrictive, and the scope of protection of the present disclosure is defined by the claims.

## Claims

1. A front bumper skin (10) provided with a mounting opening (11) suitable for mounting a headlight (50), wherein the front bumper skin (10) comprises a covering member (20) arranged along the edge of the mounting opening (11) to shield a gap at the edge of the mounting opening (11), and wherein the covering member (20) at least covers the lower edge of the mounting opening (11), **characterized in that** the covering member (20) is configured as a substantially L-shape and comprises a first covering part (21) arranged along the lower edge of the mounting opening (11) and a second covering part (22) extending from the first covering part (21) along the side edge of the mounting opening.

2. The front bumper skin (10) according to claim 1, wherein the front bumper skin (10) further comprises a reinforcing member arranged on the inner surface, the reinforcing member being arranged around the mounting opening (11) and comprising: a first reinforcing member (30) connected to at least a portion of the inner surface of the covering member (20); and a second reinforcing member (40) connected to a portion where the covering member (20) is not arranged.

3. The front bumper skin (10) according to claim 2, wherein the first reinforcing member (30) and/or the covering member (20) is provided with a positioning part adapted to match with the corresponding structure of the headlight (50).

4. The front bumper skin (10) according to claim 3, wherein the first reinforcing member (30) is provided with a positioning protrusion (33) adjacent to the mounting opening (11) to be suitable for engaging with a positioning receiving part (53) on the headlight (50).

5. The front bumper skin (10) according to claim 3, wherein the covering member (20) is provided with a positioning lip (23) adjacent to the mounting opening (11) to be suitable for engaging with a positioning groove on the headlight (50).

6. The front bumper skin (10) according to claim 2, wherein the first reinforcing member (30) and the second reinforcing member (40) are respectively connected to the inner surfaces of the covering member (20) and the front bumper skin (10) by welding, clamping or gluing.

7. The front bumper skin (10) according to claim 2, wherein the front bumper skin (10) comprises a connecting end (12) suitable for connecting a fender (60), the second reinforcing member (40) being configured to be matched with the contour of the front bumper skin (10), and a distance existing between the periphery of the second reinforcing member (40) and the connecting end (12) to provide freedom of the connecting end (12) in the transverse direction.

8. A front bumper side mounting structure comprising a headlight (50), a fender (60) and a front bumper skin (10) according to any one of claims 1 to 7, wherein the headlight (50) is connected to a mounting opening (11) of the front bumper skin (10), and a gap at the edge of the mounting opening (11) is shielded by a covering member (20), and the front bumper skin (10) is configured to engage the fender (60) in the transverse direction.

9. A method for assembling a front bumper side mounting structure according to claim 8, comprising:
applying a force to the connecting end (12) of the front bumper skin (10) for connecting the fender (60) in the transverse direction, so that the connecting end (12) is deformed towards the outside;
maintaining the deformation state of the connecting end (12) and connecting the front bumper skin (10) with the headlight (50); and
releasing the force applied to the connecting end (12) to make the front bumper skin (10) rebound towards the inside, and then applying an inward thrust to the connecting end (12) to connect the front bumper skin (10) to the fender (60).

## Patentansprüche

1. Eine Fronthaubenhaut (10) mit einer Befestigungsöffnung (11), die zum Anbringen eines Scheinwerfers (50) geeignet ist, wobei die Vorderhaut (10) aus einem an der Kante der Befestigungsöffnung (11) angebrachten Abdeckträger (20) besteht, der einen gaP an der Kante der Befestigungsöffnung abschirmt (11), wobei der Abdeckträger (20) mindestens Unterkante der Einbauöffnung (11), die **dadurch gekennzeichnet ist, dass** der Deckträger (20) als L-Form im Wesentlichen konfiguriert ist und einen ersten, am unteren Rand der Einbauöffnung (11) angebrachten Deckteil (21) und einen zweiten, vom ersten Deckteil (21) entlang der Seitenkante der Einbauöffnung verlaufenden Teil (22) umfasst.

2. Die Fronthaubenhaut (10) gemäß Angabe 1, wobei die Vorderhaut (10) weiter besteht ein auf der inneren Oberfläche angebrachtes verstärkendes Element, das um die Einbauöffnung (11) herum angebrachter Teil, der Folgendes umfasst: eine erste Verstärker (30), der an mindestens einem Teil der inneren Oberfläche der Abdeckung angeschlossen ist Mitglied (20); und ein zweites verstärkendes Mitglied (40), das an einen Teil angeschlossen ist, in dem die Deckungsmitglied (20) ist nicht arrangiert.

3. Die Fronthaubenhaut (10) gemäß Angabe 2, wobei das erste verstärkende Element (30) und/oder das Abdeckungsmitglied (20) mit einem Stellteil versehen ist, das an die Anforderungen angepasst ist mit der entsprechenden Lichtstruktur (50).

4. Die Fronthaubenhaut (10) gemäß Angabe 3, wobei das erste verstärkende Element (30) neben der Einbauöffnung (11) bis geeignet sein, um mit einem Positions-Empfangsteil (53) an der Scheinwerfer (50) zu arbeiten.

5. Die Fronthaubenhaut (10) gemäß Angabe 3, wobei der Deckträger (20) mit einer Lippenpositionierung (23) neben der Montagestelle (11) versehen sein, um geeignet zu sein, Einbinden mit einer Positionierungsrinne am Scheinwerfer (50).

6. Die Fronthaubenhaut (10) gemäß Angabe 2, wobei das erste verstärkende Element (30) bzw. das zweite Verstärkung-Element (40) sind an die Innenflächen angeschlossen. des Deckbetts (20) und der vorderen Stoßfängerhaut (10) durch Schweißen, Kleben oder Kleben.

7. Die Fronthaubenhaut (10) gemäß Angabe 2, wobei die Vorderhaut (10) besteht aus einem Verbindungsende (12), das für den Anschluss eines Geldgebers geeignet ist (60), das zweite verstärkendes Element (40), das so konfiguriert ist, dass es der Kontur der Vorderseite entspricht Stoßfängerhaut (10) und ein Abstand zwischen der Peripherie der zweiten Verstärkung Mitglied (40) und Anschlussende (12), um die Freiheit des Anschlussende (12) in Querrichtung.

8. Eine Seitenaufhängung des vorderen Stoßstangenaufbaus, bestehend aus einer Scheinwerferlampe (50), einem Ventilator (60) und einem Fronthaubenhaut (10) gemäß einer der Angaben 1 bis 7, wobei das Scheinwerfer (50) mit einer montierten Öffnung (11) der vorderen Stoßfängerhaut (10) und einer Lücke am Rand von die Montageöffnung (11) wird durch einen Abdeckträger (20) abgeschirmt, und die Fronthaubenhaut (10) so konfiguriert ist, dass der Fender (60) in Querrichtung eingeschaltet wird.

9. ein Verfahren für die Montage einer vorderen Stoßstangenaufhängung nach dem Anspruch 8, bestehend aus:
zum Anbringen einer Kraft auf das Verbindungsende (12) der vorderen Stoßfängerhaut (10) zum Anschließen der Zünder (60) in Querrichtung, sodass das Verbindungsende (12) deformiert ist nach außen;
Aufrechterhaltung des Niederlassungszustands des Anschlussende (12) und Anschluss der Vorderseite Stoßfängerhaut (10) mit Scheinwerfer (50);
und lösen die Kraft auf das Verbindungsende (12), um die Fronthaubenhaut zu bilden (10) nach innen gerichtet und dann nach innen mit einem nach innen gerichteten Schub bis zum Anschlussende (12) die Fronthaubenhaut (10) an den Fender (60) anschließen.

## Revendications

1. Une peau de pare-chocs avant (10) munie d'une ouverture de montage (11) adaptée au montage d'un phare (50), dans laquelle la peau de pare-chocs avant (10) comprend un membre de couverture (20) disposé le long du bord de l'ouverture de montage (11) pour protéger un gaP au bord de l'ouverture de montage (11), et dans lequel le membre de couverture (20) couvre au moins le le bord inférieur de l'ouverture de montage (11), **caractérisé par le fait que** le membre de couverture (20) est configuré en forme de L substantielle et comprend une première partie de couverture (21) disposée le long du bord inférieur de l'ouverture de montage (11) et une deuxième partie de couverture g (22) s'étendant de la première partie de couverture (21) le long du bord de l'ouverture.

2. La peau du pare-chocs avant (10) selon la revendication 1, dans laquelle la peau du pare-chocs avant (10) comprend en outre un membre de renforcement disposé sur la surface intérieure, le renforcement membre étant disposé autour de l'ouverture de montage (11) et comprenant: une première membre de renforcement (30) relié à au moins une partie de la surface intérieure du revêtement membre (20); et d'un deuxième membre de renforcement (40) relié à une partie où (20) n'est pas prévu.

3. La peau du pare-chocs avant (10) selon la revendication 2, dans laquelle le premier membre de renforcement (30) et/ou le membre de couverture (20) est équipé d'une partie de positionnement adaptée pour correspondre avec la structure correspondante du phare (50).

4. La peau du pare-chocs avant (10) selon la revendication 3, dans laquelle le premier membre de renforcement (30) est muni d'une protrusion de positionnement (33) adjacente à l'ouverture de montage (11) à être apte à l'utilisation d'une pièce de réception de positionnement (53) sur le projecteur (50).

5. La peau du pare-chocs avant (10) selon la revendication 3, dans laquelle le membre de couverture (20) est munie d'une lèvre de positionnement (23) adjacente à l'ouverture de montage (11) pour être adaptée se lancer avec une rainure de positionnement sur le phare (50).

6. La peau du pare-chocs avant (10) selon la revendication 2, dans laquelle le premier membre de renforcement (30) et le deuxième membre de renforcement (40) sont respectivement reliés aux surfaces intérieures du membre de couverture (20) et de la peau du pare-chocs avant (10) par soudage, serrage ou collage.

7. La peau du pare-chocs avant (10) selon la revendication 2, dans laquelle la peau du pare-chocs avant (10) comprend une extrémité de connexion (12) adaptée pour connecter un ventilateur (60), la deuxième membre de renforcement (40) configuré pour correspondre au contour de l'avant peau de pare-chocs (10) et distance existant entre la périphérie du deuxième renforcement membre (40) et l'extrémité de connexion (12) pour assurer la liberté de l'extrémité de connexion (12) dans la direction transversale.

8. Une structure de montage du côté du pare-chocs avant comprenant un phare (50), un pare-chocs (60) et un la peau du pare-chocs avant (10) selon l'une des allégations 1 à 7, où le projecteur (50) est raccordé à une ouverture de montage (11) de la peau du pare-chocs avant (10), et à un trou au bord de l'ouverture de montage (11) est protégée par un membre de recouvrement (20) et la peau du pare-chocs avant (10) est configuré de manière à enclencher le défenseur (60) dans la direction transversale.

9. Méthode d'assemblage d'une structure de montage du côté du pare-chocs avant conformément à la réclamation 8, comprenant:
application d'une force à l'extrémité de connexion (12) de la peau du pare-chocs avant (10) pour la connexion l'extrémité de la voie transversale (60), de sorte que l'extrémité de liaison (12) soit déformée vers l'extérieur;
maintien de l'état de déformation de l'extrémité de connexion (12) et connexion de l'avant la peau du pare-chocs (10) avec le phare (50);
et relâchant la force appliquée à l'extrémité de connexion (12) pour faire la peau du pare-chocs avant (10) rebondir vers l'intérieur, puis appliquer une poussée vers l'intérieur à l'extrémité de raccordement (12) à branchez la peau du pare-chocs avant (10) au pare-chocs (60).
